# EUROPÄISCHE PATENTSCHRIFT

(11) **EP 3 766 164 B1**
(45) Veröffentlichungstag und Bekanntmachung des Hinweises auf die Patenterteilung: **01.05.2024**
(21) Anmeldenummer: 19708871.9
(22) Anmeldetag: 12.03.2019
(51) Int. Cl.: H02K 5/173, H02K 5/20, H02K 11/21, H02K 7/10, B60K 17/34, B60K 17/22, H02K 9/19, H02K 1/32, H02K 16/00, H02K 7/00, B60K 1/00, H02K 9/197, B60K 1/04

(54) **ELEKTROFAHRZEUG**
ELECTRIC VEHICLE
VÉHICULE ÉLECTRIQUE

(30) Priorität: 13.03.2018 EP 18161618
(43) Veröffentlichungstag der Anmeldung: 20.01.2021
(73) Patentinhaber: FLET GmbH, 38118 Braunschweig (DE)
(72) Erfinder: MEYER, Wolfgang, 38116 Braunschweig (DE); GROTE, Jochen, 38104 Braunschweig (DE)
(74) Vertreter: Gramm, Lins & Partner Patent- und Rechtsanwälte PartGmbB
(86) Internationale Anmeldenummer: PCT/EP2019/056159
(87) Internationale Veröffentlichungsnummer: WO 2019/175170

(56) Entgegenhaltungen:
- EP-A1- 0 273 482
- EP-A1- 3 171 496
- EP-A2- 2 573 906
- WO-A1-95/01883
- WO-A1-95/34117
- WO-A1-2005/053136
- WO-A1-2012/146731
- WO-A2-01/52386
- WO-A2-2014/015209
- CN-U- 204 376 659
- CN-U- 207 069 852
- CN-Y- 201 113 708
- DE-A1- 2 418 242
- DE-A1- 10 359 159
- JP-A- H 048 908
- JP-A- H1 127 881
- JP-A- H09 163 680
- JP-A- 2001 190 047
- JP-A- 2009 291 031
- JP-A- 2010 220 340
- JP-A- 2014 093 816
- JP-B2- 3 788 861
- JP-B2- 5 239 814
- JP-U- S5 666 169
- JP-U- S58 131 163
- US-A- 6 160 332
- US-A1- 2004 247 383
- US-A1- 2014 028 125
- US-A1- 2014 035 415

## Beschreibung

Die Erfindung betrifft ein Elektrofahrzeug gemäß dem Oberbegriff von Anspruch 1.

Elektrofahrzeuge, insbesondere Personenkraftwagen, werden zunehmend zur Personen- und Lastenbeförderung eingesetzt. Es hat sich herausgestellt, dass die Massenfertigung von Elektrofahrzeugen aufwändig ist, wenn in einem Fahrzeugmodell unterschiedliche Motorleistungen angeboten werden sollen.

Die WO 95/01883 A1 beschreibt einen elektrischen Fahrzeugantrieb, mit zwei Elektromotoren, deren Gehäuse stirnseitig aneinander geflanscht sind. Der äußere Motor ist mit einem Radkörper, ein innerer ringförmiger Stator ist mit dem Gehäuse und die Rotorwelle ist mit dem Radkörper verbunden. Zur Verringerung des Volumens und zur Erhöhung des Drehmoments ist der Radkörper auf der Fläche angeordnet, an der die beiden Elektromotoren angeflanscht sind, und die Kupplungseinrichtung ist in der Ausnehmung im Stator befestigt. Mit einem solchen System können nicht mehr als zwei Elektromotor-Module hintereinander montiert werden.

Aus der CN 201113708 Y ist ein Fahrzeuggeneratormotor bekannt, der einen Fahrzeugmotor mit variabler Frequenz zur Geschwindigkeitsregulierung und einen Hilfsmotor umfasst. Der Hauptmotor und der Hilfsmotor teilen sich eine Motorwelle. Das Gehäuse des Hauptmotors und das benachbarte Ende des Gehäuses des Hilfsmotors sind direkt und fest verbunden. Das äußere Ende der Motorwelle auf der Seite des Hauptmotors ist mit einem Anschlussflansch versehen. Dieser FahrzeugGeneratormotor hat einen hohen Stromerzeugungswirkungsgrad, ein einfaches Layout und eine große Generatorleistung.

In der US 2014/0035415 A1 wird eine Antriebskraftübertragungsvorrichtung beschrieben, die in der Lage ist, die Verformung von Passflächen von Gehäusen zu vermindern. Eine solche Antriebskraftübertragungsvorrichtung wird als Getriebe für ein Hybridfahrzeug verwendet, das einen ersten Elektromotor und einen zweiten Elektromotor enthält. Der erste Elektromotor und der weite Elektromotor, die jeweils als Motor/Generator dienen, sind in einem unabhängigen ersten Gehäuse und einem zweiten Gehäuse untergebracht, und miteinander gekoppelt, um das Getriebe für ein Hybridfahrzeug zu bilden. Ein erster Stator des ersten Elektromotors und ein zweiter Stator des zweiten Elektromotors sind an dem ersten Gehäuse und dem zweiten Gehäuse jeweils gegenüber einer ersten Anpassungsfläche und einer zweiten Anpassungsfläche befestigt.

Die US 2004/0247383 A1 beschreibt eine Kupplungsstruktur für einen Tandemmotor, die zwei Lagerhülsen mit darauf ausgebildeten Nuten, ein Verbindungsstück und elastische Befestigungselemente umfasst. Der Verbinder hat zwei einander gegenüberliegende Enden. An jedem der Enden ist mindestens eine Nut ausgebildet. Ein erstes elastisches Befestigungselement wird in die Nut des Verbinders am ersten Ende eingesteckt und in einer der beiden Nuten aufgenommen. Ebenso wird ein zweites elastisches Befestigungselement in die Nut des Verbinders am zweiten Ende eingesteckt und in der Nut in der anderen Lagerhülse aufgenommen. Ein solches System ist für hohe Drehmomente, wie sie in Elektrofahrzeugen auftreten, ungeeignet.

Der Erfindung liegt die Aufgabe zugrunde, Nachteile im Stand der Technik zu vermindern.

Die Erfindung löst das Problem durch ein Elektrofahrzeug mit den Merkmalen von Anspruch 1.

Vorteilhaft an der Erfindung ist, dass der Elektromotor auf diese Weise sehr kompakt gebaut werden kann. So ist es gemäß einer bevorzugten Ausführungsform möglich, dass die Verbindung mittels der Koppelstrukturen am Gehäuse und an den Rotorwellen zu keiner zusätzlichen axialen Verlängerung der Baulänge führen.

Vorteilhaft ist zudem, dass eine derartige Koppelstruktur in der Regel vergleichsweise einfach zu fertigen ist. Es ist daher möglich, den Elektromotor aus zwei, drei, vier, fünf oder mehr Elektromotor-Modulen aufzubauen. Wie bei jeder modularen Bauweise führt die Modularisierung der einzelnen Komponenten in aller Regel zu einer effizienteren Fertigung.

Vorzugsweise ist die Zahl der Elektromotor-Module kleiner als zwanzig.

Ist jeder Rotor jedes Elektromotor-Moduls mittels je zweier Drehlager gelagert, sodass die Elektromotor-Module unabhängig voneinander funktionstüchtig sind, ist der Rotor jedes Elektromotor-Moduls auch dann mittels Drehlagern gelagert, wenn die Elektromotor-Module nicht miteinander verbunden sind.

Vorzugsweise sind zumindest zwei Elektromotor-Module permanenterregte Synchronmotoren. Günstig ist es, wenn alle Elektromotor-Module permanenterregte Synchronmotoren sind.

Vorzugsweise beträgt eine Nenn-Leistung zumindest zweier Elektromotor-Module zwischen 25 und 75 Kilowatt.

Vorzugsweise sind die Wellen-Koppelstrukturen auf gleicher axialer Höhe angeordnet wie die Drehlagerung.

Die Rotorwellen der Elektromotor-Module verlaufen (im montierten Zustand) kollinear.

Besitzt die Drehlagerung ein erstes Drehlager, das einen ersten Satz an Wälzkörpern, die ringförmig angeordnet sind, , und ein zweites Drehlager, das einen zweiten Satz an Wälzkörpern, die ringförmig und versetzt zum ersten Satz angeordnet sind, und sind die Wellen-Koppelstrukturen zumindest teilweise, besonders bevorzugt vollständig vom ersten Drehlager und vom zweiten Drehlager umgeben, handelt es sich bei dem ersten Drehlager und/oder dem zweiten Drehlager beispielsweise um ein Wälzlager, insbesondere ein Kugellager.

Vorteilhaft an dieser Ausführungsform ist, dass die Koppelstrukturen jedes einzelnen Elektromotor-Moduls an beiden Seiten von zumindest einem Wälzlager gelagert sind.

Zum Zusammenfügen von zwei Elektromotor-Modulen müssen lediglich die beiden Koppelstrukturen der jeweiligen Elektromotor-Module formschlüssig miteinander verbunden werden.

Günstig ist es, wenn in dieser Anordnung die jeweils zu äußerst liegenden Drehlager der Elektromotor-Module aneinander angrenzen. Auf diese Weise wird ein besonders kompakter Elektromotor erhalten. Aufgrund der Modularisierbarkeit des Elektromotors eignet er sich gut für die Verwendung in Fahrzeugen, insbesondere in Personenkraftwagen. Allerdings ist dieser Elektromotor auch in anderen Fahrzeugen und auch in anderen Bereichen anwendbar.

Vorzugsweise besitzt die erste Wellen-Koppelstruktur eine sich in axialer Richtung erstreckende Koppelstruktur, insbesondere einen Vorsprung. Vorzugsweise besitzt die erste Wellen-Koppelstruktur also einen sich in axialer Richtung erstreckenden Vorsprung. Die zweite Wellen-Koppelstruktur hat vorzugsweise einen sich ebenfalls in axialer Richtung erstreckenden Rücksprung, sodass die erste Wellen-Koppelstruktur und die zweite Koppelstruktur in axialer Richtung aneinander entlang einer Kontaktfläche anliegen. Günstig ist es, wenn die Kontaktflächen mit einer Winkelmessebene, die eine Drehachse des Rotors enthält, einen Winkel von höchstens 5° bildet. Auf diese Weise werden axiale Kräfte vermindert, die beim Anlegen eines Drehmoments an die Verbindung der Elektromotor-Module anderweitig entstehen würden.

Es ist möglich, dass der Vorsprung und der Rücksprung asymmetrisch ausgebildet sind. In diesem Fall erstreckt sich eine erste Kontaktfläche, entlang der der Vorsprung und der Rücksprung aneinander anliegen, in einem anderen Winkel relativ zu der Winkelmessebene als die zweite Kontaktfläche. Insbesondere ist es möglich, dass einer der Winkel Null ist. In diesem Fall entsteht keinerlei axiale Kraft, wenn sich die Rotoren in eine erste Richtung drehen. Hingegen entsteht eine größere Kraft, wenn die Rotoren in die entgegengesetzte Richtung drehen.

Vorzugsweise weist der Elektromotor zumindest eine Zusatzkomponente auf, die eine Zusatzkomponenten-Koppelstruktur mit einem sich in axialer Richtung erstreckenden Vorsprung hat, wobei die Zusatzkomponente mit einer der Koppelstrukturen eines Elektromotor-Moduls formschlüssig verbunden ist. Dadurch dass die Zusatzkomponente die gleiche Koppelstruktur hat wie die Elektromotor-Module, kann sie je nach Anforderung beliebig zwischen zwei Elektromotor-Modulen platziert werden. Bei der Zusatzkomponente handelt es sich beispielsweise um einen Drehgeber.

In diesem Fall weist der Elektromotor entsprechend einen Drehgeber auf, der eine Drehgeber-Koppelstruktur mit einem sich in axialer Richtung erstreckenden Vorsprung hat, wobei der Drehgeber mit einer der Koppelstrukturen eines Elektromotor-Moduls formschlüssig verbunden ist. Dadurch dass der Drehgeber die gleiche Koppelstruktur hat wie die Elektromotor-Module, kann er je nach Anforderung beliebig zwischen zwei Elektromotor-Modulen platziert werden.

Es sei darauf hingewiesen, dass die Rotorwellen vorzugsweise aller Elektromotor-Module miteinander formschlüssig koppelbare Koppelstrukturen aufweisen.

Alternativ oder zusätzlich handelt es sich bei der Zusatzkomponente um eine Bremse. Gemäß dieser Ausführungsform besitzt der Elektromotor eine Bremse, die eine Bremsen-Koppelstruktur mit einem in axialer Richtung sich erstreckenden Vorsprung hat, wobei die Bremse mit einer Koppelstruktur eines Elektromotor-Moduls oder des Drehgebers formschlüssig verbunden ist.

Wiederum alternativ oder zusätzlich handelt es sich bei der Zusatzkomponente um eine Kupplung.

Ein zweiter Aspekt der Erfindung betrifft einen Elektromotor, der einen Stator, der Stator-Elektromagnete aufweist, und einen Rotor, der Permanentmagnete aufweist, umfasst, wobei die Rotorwelle einen Kühlkanal hat. Ein Elektrofahrzeug mit einem entsprechenden Elektromotor ist ebenfalls erfindungsgemäß. In anderen Worten ist ein Elektrofahrzeug mit einem Elektromotor, der (a) einen Stator, der Stator-Elektromagneten aufweist, und (b) einen Rotor, der Permanentmagneten aufweist, hat, wobei (c) die erste Rotorwelle und die zweite Rotorwelle einen Kühlkanal haben, erfindungsgemäß. Es ist möglich, nicht aber notwendig, dass dieses Elektrofahrzeug die Merkmale gemäß Anspruch 1 hat. Die oben genannten bevorzugten Ausführungsformen sind auch bevorzugte Ausführungsformen der in diesem Absatz genannten Erfindung. Im Folgenden genannte bevorzugte Ausführungsformen beziehen sich auf beide Erfindungen.

Günstig ist es, wenn dieser Elektromotor aus einem ersten Elektromotor-Modul und einem zweiten Elektromotor-Modul aufgebaut ist, wobei die Elektromotor-Module die oben angegebenen Eigenschaften haben. Die erste Rotorwelle und die zweite Rotorwelle sind mittels der Wellen-Koppelstrukturen formschlüssig miteinander gekoppelt, wobei der Kühlkanal vorzugsweise durch den ersten Rotor und den zweiten Rotor verläuft. Günstig ist es zudem, wenn die Koppelstrukturen zumindest teilweise von der Drehlagerung umgeben sind. Auf diese Weise wird ein mit gekühlten Rotoren modular aufgebauter Elektromotor erhalten.

Günstig ist es, wenn die Rotorwelle einen in axialer Richtung verlaufenden Zentral-Kühlkanal, einen Zuführ-Stichkanal, der radial auswärts verläuft und mit dem Zentral-Kühlkanal verbunden ist, und zudem einen Abführ-Stichkanal aufweist, der auswärts verläuft und der mit dem Zentral-Kühlkanal verbunden ist. Es ist auf diese Weise möglich, Kühlfluid durch den Zuführ-Stichkanal dem Stator zuzuführen. Der Stator besitzt vorzugsweise eine Kühlfluid-Zuführung zum Zuführen von Kühlfluid, insbesondere von Kühlflüssigkeit, zum Zuführ-Stichkanal, und eine Kühlfluid-Abführung zum Ableiten von Kühlfluid aus dem Abführ-Stichkanal.

Besonders bevorzugt hat die Kühlfluid-Zuführung eine erste Wellendichtung und eine zweite Wellendichtung, die einen Ringkanal bilden. Die Kühlfluid-Zuführung besitzt vorzugsweise zudem eine Zuleitung, die ausgebildet ist zum Zuführen von Kühlfluid zum Ringkanal. Der Ringkanal ist so angeordnet, dass das Kühlfluid in den Zuführ-Stichkanal fließt. In anderen Worten ist der Zuführ-Stichkanal auf einer axialen Länge entlang einer Längsachse des Rotors zwischen der ersten Wellendichtung und der zweiten Wellendichtung angeordnet.

Sofern mehr als zwei Elektromotor-Module vorhanden sind, sind vorzugsweise eine Mehrheit der Elektromotor-Module, besonders günstig, alle Elektromotor-Module baugleich. Unter dem Merkmal, dass die Elektromotor-Module baugleich sind, wird insbesondere verstanden, dass die Elektromotor-Module zu zumindest 90 Gewichtsprozent aus gleichen Teilen bestehen. Insbesondere stimmen vorzugsweise zumindest zwei der Elektromotor-Module zu zumindest 95 Gewichtsprozent, insbesondere vollständig, in den für die technische Funktion notwendigen Teilen überein. Es ist möglich, nicht aber notwendig, dass sich die Elektromotor-Module in für ihre Funktion irrelevanten Teilen unterscheiden, beispielsweise der Farbe oder natürlich in einem etwaigen Schild mit einer Seriennummer. Besonders bevorzugt sind alle Elektromotor-Module baugleich.

Vorzugsweise besitzt zumindest der Motor eines der Elektromotor-Module einen Magnetträger und eine Mehrzahl an Permanentmagneten, die am Magnetträger befestigt sind. Günstig ist es, wenn der Rotor einen Nebenkanal, der zumindest auch in axialer Richtung durch den Magnetträger verläuft und mit dem Zentral-Kühlkanal verbunden ist, aufweist. Auf diese Weise kann der Magnetträger effektiv gekühlt werden.

Permanentmagneten verlieren ihre Magnetisierung oberhalb der Curie-Temperatur. Da Elektromotoren, insbesondere solche, die in Elektrofahrzeugen verbaut sind, auch in vergleichsweise warmen Umgebungen funktionieren müssen und zudem eine Erwärmung der Permanentmagnete und des Magnetträgers insbesondere durch Wirbelstrom-Verluste nicht vermeidbar ist, muss sichergestellt sein, dass sich die Permanentmagneten nicht zu stark erwärmen. Bislang erfolgt dies durch Erfassen der Temperatur und durch ein Abschalten des entsprechenden Motors, wenn eine vorgegebene Schwellentemperatur, die unterhalb der Kühltemperatur der Permanentmagneten liegt, überschritten wurde. Durch das Kühlen des Magnetträgers ist dieses Vorgehen zwar weiterhin möglich und bevorzugt, aber nicht mehr notwendig.

Besonders günstig ist es, wenn die Permanentmagneten radial außerhalb der Stator-Elektromagneten angeordnet sind. Der Elektromotor kann dann als Außenläufer bezeichnet werden. Besonders günstig ist es dann, wenn die Rotorwelle einen ersten Hülsenabschnitt, der sich in eine erste axiale Richtung erstreckt, und einen zweiten Hülsenabschnitt, der sich in eine der ersten axialen Richtung entgegengesetzte Richtung erstreckt, aufweist, wobei die Hülsenabschnitte vorzugsweise symmetrisch zueinander sind und vorzugsweise Kühlkanäle enthalten. Diese Kühlkanäle sind vorzugsweise mit dem Kühlkanal, insbesondere dem Zentral-Kühlkanal verbunden.

Durch das aktive Kühlen der Hülsenabschnitte kann der Elektromotor mit einer hohen Dauerleistung betrieben werden.

Die Hülsenabschnitte sind vorzugsweise an einem rohrförmigen Bauteil ausgebildet, das an einem Steg befestigt ist. Der Steg besitzt vorzugsweise einen radial auswärts verlaufenden Verbindungskanal, der den Zentral-Kühlkanal mit einem Außenkanal im rohrförmigen Bauteil verbindet. Die genannte Bauart führt dazu, dass die Hülsenabschnitte mit den Kanälen vergleichsweise einfach zu fertigen sind.

Es sei darauf hingewiesen, dass hier wie in der gesamten Beschreibung unter dem Merkmal, dass ein bestimmtes Objekt vorhanden ist, insbesondere verstanden wird, dass zumindest eines dieser Objekte vorhanden ist. Im vorliegenden Zusammenhang bedeutet dies, dass der Steg zumindest einen radial auswärts verlaufenden Verbindungskanal hat.

Günstig ist es, wenn der Stator einen Kühlstutzen aufweist, der angeordnet ist zum Kühlen der Elektromagneten. In den Elektromagneten fällt der größte Teil der Verlustwärme an. Gleichzeitig sind Elektromagneten in der Regel weniger temperaturanfällig als Permanentmagneten. Es ist daher möglich, dass das Kühlfluid in einem Kühlkreislauf geführt ist und in Strömungsrichtung hinter einem Kühler zunächst die Permanentmagneten, insbesondere die Magnetträger, kühlt und danach die Stator-Elektromagneten. Alternativ ist es auch möglich, dass zwei Kühlkreisläufe existieren, wobei ein Kühlkreislauf die Permanentmagneten kühlt und ein zweiter Kühlkreislauf die Elektromagneten.

Günstig ist es, wenn der Elektromotor wie oben beschrieben aus zumindest zwei Elektromotor-Modulen aufgebaut ist, wobei die Motoren der jeweiligen Elektromotor-Module jeweils einen Kühlkanal haben und wobei die beiden Kühlkanäle miteinander verbunden sind, sodass Kühlfluid aus dem ersten Kühlkanal in den zweiten Kühlkanal strömen kann.

Vorzugsweise besitzt das erste Elektromotor-Modul ein erstes Modul-Gehäuse, das eine erste Gehäuse-Koppelstruktur aufweist, wobei das zweite Elektromotor-Modul ein zweites Modul-Gehäuse hat, das eine zweite Gehäuse-Koppelstruktur aufweist und wobei die Elektromotor-Module mittels ihrer Gehäuse-Koppelstruktur formschlüssig miteinander verbunden sind. Dies stellt eine besonders einfache Form der Kopplung der Elektromotor-Module dar.

Die Gehäuse-Koppelstrukturen sind vorzugsweise von außen lösbar verbindbar. In anderen Worten können je zwei gekoppelte Elektromotor-Module von außen verbunden und voneinander gelöst werden, ohne dass zwingend weitere Elektromotor-Module verbunden oder voneinander gelöst werden müssen.

Besonders günstig ist es, wenn die Gehäuse-Koppelstrukturen jeweils zumindest teilweise durch einen konischen Gehäusering gebildet sind. Günstig ist es, wenn das Elektromotor-Modul einen Verbinder zum formschlüssigen Verbinden der Gehäuse-Koppelstrukturen miteinander aufweist. Der Verbinder ist vorzugsweise von außen montierbar ausgebildet. In anderen Worten sind die Elektromotor-Module allein durch Lösen des Verbinders voneinander trennbar. Der Verbinder ist von außen montierbar.

Vorzugsweise ist der Verbinder eine Schelle, sodass die Gehäuse-Koppelstrukturen mittels der Schelle miteinander verbunden sind. Die Schelle hat vorzugsweise eine zumindest abschnittsweise konische Innenfläche, wobei die konische Innenfläche in der Regel so ausgebildet ist, dass sich keine Linienberührung, sondern eine flächige Berührung zwischen den Gehäuseringen einerseits und der Schelle andererseits ergibt.

Vorzugsweise sind die erste Rotorwelle und die zweite Rotorwelle, sowie gegebenenfalls weitere Komponenten des Elektromotors, die mittels der Wellen-Koppelstrukturen gekoppelt sind, mit axialem Spiel gekoppelt. Axiale Längenänderungen an den Rotoren durch Fertigungstoleranzen oder durch thermisch bedingte Längenänderungen während des Betriebs werden durch ein definiertes axiales Spiel in der Wellenkoppelstruktur ausgeglichen.

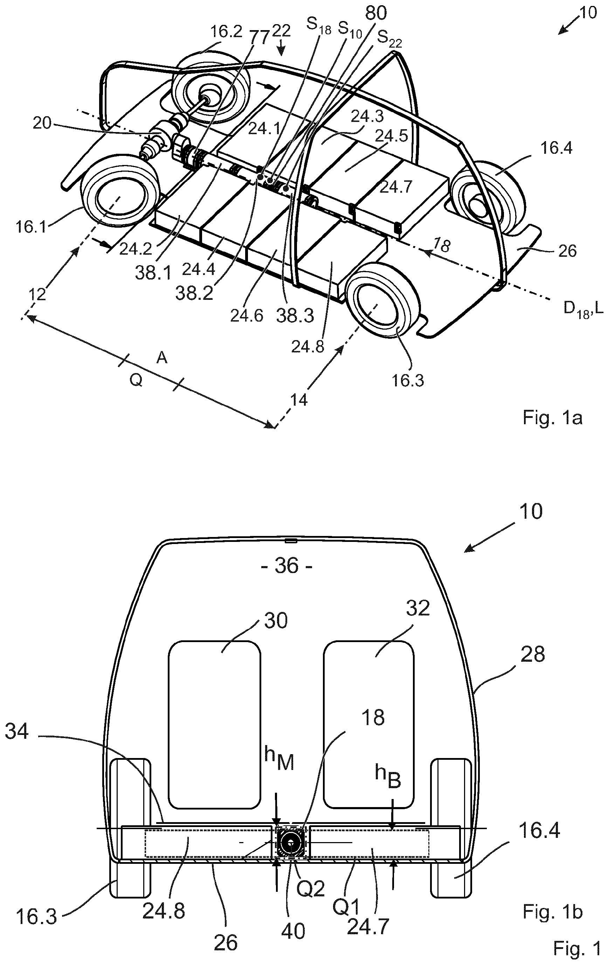

Im Folgenden wird die Erfindung anhand der beigefügten Zeichnungen näher erläutert. Alle Zeichnungen zeigen die Erfindung an einer von verschiedenen Elektromotor-Bauarten, nämlich als permanenterregte Synchronmotoren, die eine bevorzugte Ausführungsform der Erfindung darstellen. Es könnten jedoch auch andere Elektromotor-Bauarten verwendet werden, beispielsweise Asynchronmotoren oder bürstenlose Gleichstrommotoren. In den Zeichnungen zeigt
- Figur 1a: ein erfindungsgemäßes Elektrofahrzeug mit einem erfindungsgemäßen Elektromotor,
- Figur 1: b ein erfindungsgemäßes Elektrofahrzeug in einer Ansicht von hinten,
- Figur 1c: ein Elektrofahrzeug gemäß einer zweiten Ausführungsform mit zwei Schaltkupplung und zwei angetriebenen Achsen in einer perspektivischen Ansicht,
- Figur 1d: ein Elektrofahrzeug gemäß einer dritten Ausführungsform mit zwei erfindungsgemäßen Elektromotoren, deren Rotoren parallel zueinander verlaufen, mit vier Schaltkupplungen in einer perspektivischen Ansicht,
- Figur 2a: eine maßstabsgerechte perspektivische Ansicht eines Elektromotor-Moduls, das als Innenläufer ausgebildet ist und Teil eines erfindungsgemäßen Elektromotors sein kann,
- Figur 2b: den Rotor des Elektromotor-Moduls der Innenläufer-Version gemäß Figur 2a in einer perspektivischen Ansicht,
- Figur 3a: einen Querschnitt durch einen erfindungsgemäßen Elektromotor in Form eines Innenläufers aus zwei Elektromotor-Modulen gemäß der Figuren 2a und 2b,
- Figur 3b: eine Detailansicht der Elektromotor-Module gemäß Figur 3a,
- Figur 4: in der Teilfigur 4a eine perspektivische, maßstabsgerechte Ansicht eines erfindungsgemäßen Elektromotors gemäß einer vierten Ausführungsform, der drei Elektromotor-Module umfasst, und in Teilfigur 4b eine teilweise Explosionsansicht des Elektromotors gemäß Teilfigur 4a,
- Figur 5: einen Querschnitt durch ein Elektromotor-Modul, das einen Elektromotor in Form eines Innenläufers darstellt,
- Figur 6: einen Querschnitt durch ein Elektromotor-Modul eines erfindungsgemäßen Elektromotors oder einen erfindungsgemäßen Elektromotor, das einen Außenläufer-Elektromotor darstellt,
- Figur 7: in der Teilfigur 7a den Rotor des Elektromotor-Moduls gemäß Figur 6 in einer isometrischen perspektivischen Ansicht und in Teilfigur 7b eine Rotorwelle und einen Steg des Rotors gemäß Teilfigur 7a,
- Figur 8: einen Querschnitt durch einen Elektromotor mit zwei Elektromotor-Modulen, die als Außenläufer-Elektromotoren ausgebildet sind und keinen Teil der Erfindung formen.
- Figur 9: in der Teilfigur 9a einen Kühlstützen für einen erfindungsgemäßen Elektromotor in einer isometrischen perspektivischen Glaskörperansicht und Figur 9b einen Querschnitt durch die Statorkappe 50 des Kühlstutzens gemäß Teilfigur 9a und
- Figur 10: eine weitere Ausführungsform eines Elektromotor-Moduls 38.

*Figur 1a* *zeigt ein erfindungsgemäßes Elektrofahrzeug 10 in Form eines Elektroautos, das eine erste Achse 12 in Form einer Vorderachse und eine zweite Achse 14 in Form einer Hinterachse aufweist. An der ersten Achse 12 sind Räder 16.1, 16.2 befestigt, an der zweiten Achse 14 sind Räder 16.3, 16.4 befestigt. Ein Elektromotor 18 treibt über ein Differentialgetriebe 20, das auch Differential genannt werden kann, die Räder 16. 1, 16.2 der ersten Achse 12 an.*

*Der Elektromotor 18 wird von einer Batterie 22 mit Strom versorgt. Die Batterie 22 umfasst zumindest zwei, im vorliegenden Fall acht, Batterie-Einheiten 24.1, 24.2,* ..., *24.8. Unter einer Batterie wird hier jede Art von Baugruppe aus galvanischen Elementen verstanden, welche der Speicherung elektrischer Energie oder der Umwandlung in elektrische Energie zur Versorgung des Elektromotors 18 dient.*

*Es ist zu erkennen, dass eine Motor-Drehachse D₁₈ zwischen den Batterie-Einheiten 24.1, 24.3, 24.5, 24.7 einerseits und 24.2, 24.4, 24.6 und 24.8 andererseits verläuft. Eine Masse mᵣ der rechtsseitig der Motor-Drehachse D₁₈ angeordneten Batterie-Einheiten 24.1, 24.3, 24.5 und 24.7 entspricht einer Masse m, der Batterie-Elemente links der Motor-Drehachse D₁₈, also im vorliegenden Fall der Batterie-Elemente 24.2, 24.4, 24.6 und 24.8.*

*Unter dem Merkmal, dass die beiden Massen mᵣ, mₗ einander entsprechen, wird insbesondere verstanden, dass die beiden Massen um höchstens 20%, vorzugsweise höchstens 15%, voneinander abweichen.*

*Das Elektrofahrzeug 10 besitzt einen Fahrzeugboden 26. In der vorliegenden Ausführungsform sind sowohl die Batterie* 22 *als auch der Elektromotor 18 auf dem Fahrzeugboden 26 montiert. Das Elektrofahrzeug 10 umfasst zudem nicht eingezeichnete Komponenten, wie beispielsweise eine Außenhülle, insbesondere aus Blech, sowie Sitze und eine Lenkung.*

*Figur 1b* *zeigt das Elektrofahrzeug 10 in einer Ansicht von hinten. Es ist zu erkennen*, *dass eine Elektromotor-Bauhöhe h_{M} einer Batterie-Bauhöhe h_{B} entspricht. Die Elektromotor-Bauhöhe h_{M} ist die Höhe desjenigen gedachten Quaders Q₁ minimalen Volumens, der 90% der Masse der Batterie 22 umschließt*. *Figur 1b* *zeigt zudem eine Karosserie* 28 *des Elektrofahrzeugs 10. Eingezeichnet ist zudem ein Fahrersitz 30 und ein Beifahrersitz 32, die beide auf einem ebenen Boden 34 eines Fahrgastraums 36 angeordnet sind.*

*In der in* *Figur 1a* *gezeigten Ausführungsform ist der Elektromotor 18 aus drei hintereinander gekoppelten Elektromotor-Modulen 38.1, 38.2, 38.3 aufgebaut. Alle drei Elektromotor-Module 38.1, 38.2, 38.3 sind baugleich und weisen miteinander gekoppelte Rotorwellen 40.1, 40.2, 40.3 auf. Die Elektromotor-Module 38.i (i = 1,* ... *N; N: Anzahl der Elektromotor-Module) sind baugleich.*

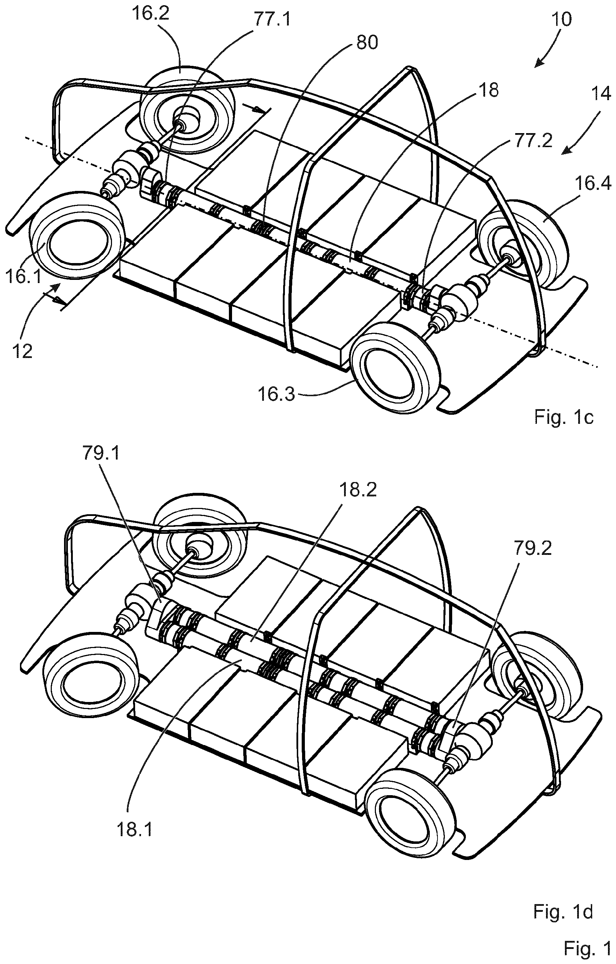

Figur 1c zeigt eine maßstabsgerechte perspektivische Ansicht eines erfindungsgemäßen Elektrofahrzeugs 10 ohne seine Karosserie, das eine erste Schaltkupplung 77.1 und eine zweite Schaltkupplung 77.2 aufweist. Die erste Schaltkupplung liegt in einem Drehmomentpfad zwischen dem Elektromotor 18 und den Rädern 16.1, 16.2 der ersten Achse 12. Die zweite Schaltkupplung 72 liegt in einem Drehmomentpfad zwischen dem Elektromotor 18 und den Rädern 16.3 und 16.4 der zweiten Achse 14. Die Schaltkupplungen 77.1, 77.2 sind vorzugsweise elektrisch schaltbar. Es ist auf diese Weise möglich, dass das Elektrofahrzeug 10 entweder einen reinen Vorderradantrieb oder einen reinen Hinterradantrieb oder Allradantrieb hat.

Figur 1d zeigt eine reduzierte perspektivische maßstabsgerechte Ansicht eines erfindungsgemäßen Elektrofahrzeugs gemäß einer weiteren Ausführungsform, das zwei Elektromotoren 18.1, 18.2 aufweist. Beide Elektromotoren 18.1, 18.2 bestehen aus zumindest zwei Modulen, deren jeweilige Drehachsen parallel zueinander verlaufen. Es handelt sich aber um eine Parallelität im technischen Sinne, das heißt, dass es zwar möglich, nicht aber notwendig ist, dass die beiden Achsen im mathematischen Sinne parallel zueinander verlaufen. Insbesondere können die Drehachsen einen Winkel miteinander einschließen, der beispielsweise kleiner als 3° ist.

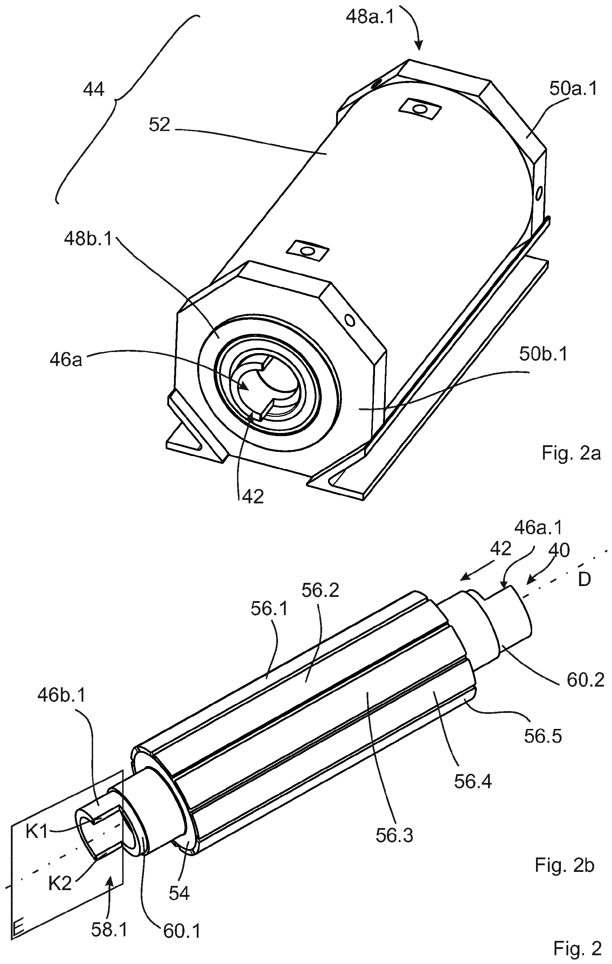

Figur 2a zeigt ein *Elektromotor*-Modul 38 der Innenläufer-Version, das einen ersten Rotor 42 (vgl. Figur 2b) und ein Modul-Gehäuse 44 aufweist. An der Rotorwelle 40 des Rotors 42 ist eine erste Koppelstruktur 46a ausgebildet. Das Modul-Gehäuse 44 umfasst einen Gehäusering 48, der auch als Kopplungsring bezeichnet werden kann. Im vorliegenden Fall ist der Gehäusering 48 an einer Statorkappe 50a ausgebildet. Das Modul-Gehäuse 44 umfasst zudem eine zweite Statorkappe 50b und einen Statorträger 52, der mit beiden Statorkappen 50a, 50b verbunden und in der gezeigten Ausführungsform der Innenläufer-Version zwischen beiden angeordnet ist.

Es ist zu erkennen, dass die Wellen-Koppelstruktur 46 teilweise axial über das Modul-Gehäuse 44 übersteht und teilweise hinter das Modul-Gehäuse 44 zurückspringt.

Figur 2b zeigt den Rotor 42 mit der Wellen-Koppelstruktur 46a. 1 und einer zweiten Wellen-Koppelstruktur 46b.1, die der ersten Koppelstruktur 46a gegenüberliegend angeordnet ist. Der Rotor 42 besitzt einen Magnetträger 54, mittels dem Permanentmagneten 56.1, 56.2 angeordnet sind. Die Permanentmagneten 56.j (j = 1, 2, ...) sind so angeordnet, dass Nordpol und Südpol jeweils alternierend nach außen weisen.

Figur 2b zeigt zudem, dass die erste Koppelstruktur 46a einen sich in axialer Richtung erstreckenden Vorsprung 58.1 hat. Im montierten Zustand liegt dieser Vorsprung 58.1 entlang zweier Kontaktflächen K1, K2 an einer komplementären Koppelstruktur des benachbarten Elektromotor-Moduls an. Die Kontaktflächen K1, K2 bilden mit einer Winkelmessebene E im vorliegenden Fall einen Winkel zwischen 0° und 1°. Die Winkelmessebene E ist eine Ebene, die eine Drehachse D des Rotors 42 enthält und die die jeweilige Kontaktfläche K an zumindest einer Stelle berührt oder schneidet.

Der Rotor 42 besitzt zudem eine erste Lagersitzfläche 60.1 und eine zweite Lagersitzfläche 60.2.

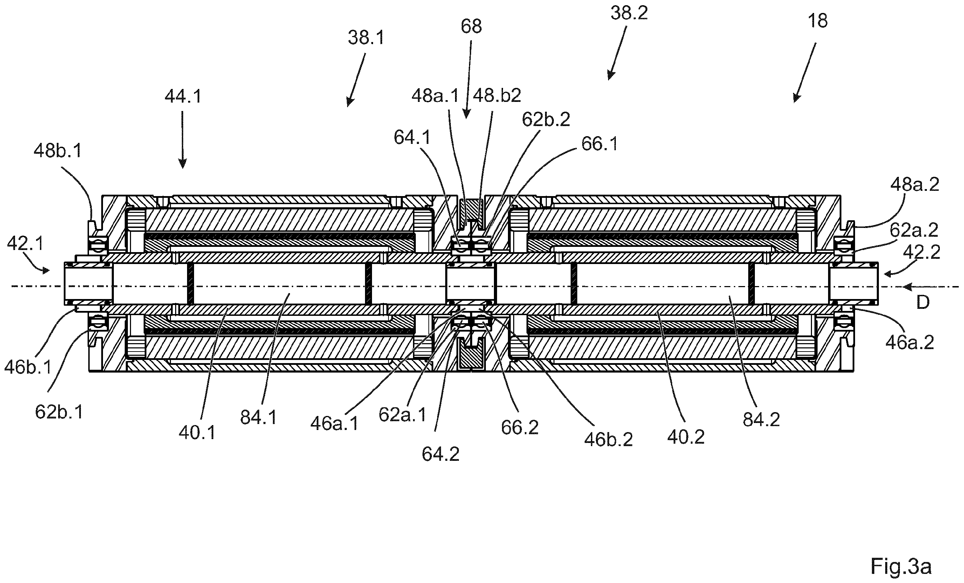

Figur 3a zeigt einen Querschnitt durch eine Ausführungsform eines erfindungsgemä-ßen Elektromotors 18, der aus Elektromotor-Modulen 38.1, 38.2 aufgebaut ist, die jeweils baugleich sind.

Das erste Elektromotor-Modul 38.1 besitzt ein erstes Drehlager 62a.1 in Form eines Kugellagers und ein zweites Drehlager 62b.1. Das zweite Elektromotor-Modul 38.2 besitzt ein Drehlager 62a.2 und ein zweites Drehlager 62b.2. Das erste Drehlager 62a.1 besitzt einen ersten Satz an Wälzkörpern 64.1, 64.2, ..., die ringförmig angeordnet sind. Das zweite Drehlager 62b.2 besitzt ebenfalls Wälzkörper 66.1, 66.2, ..., die entlang eines zweiten Rings angeordnet sind, der versetzt zum ersten Ring liegt. Die beiden Drehlager 62a.1 und 62b.2 bilden ein Drehlager 68. Es ist zu erkennen, dass die Koppelstruktur 46a des ersten Elektromotor-Moduls 38.1 mit einer Koppelstruktur 46b.2 des zweiten Elektromotor-Moduls 38.2 einen Formschluss bildet und dass die Koppelstruktur 46a.1, 46b.2 von der Drehlagerung 68 umgeben sind.

Figur 3a zeigt, dass sich die Koppelstruktur 46a.1 des ersten Elektromotor-Moduls 38.1 bis unter das Drehlager 62b.2 des zweiten Elektromotor-Moduls 38.2 erstreckt. Dies stellt - unabhängig von anderen Merkmalen der hier beschriebenen Ausführungsform - eine allgemein bevorzugte Ausführungsform dar. Zudem erstreckt sich die Koppelstruktur 46b.2 bis unter das Drehlager 62a.1.

Wenn in der vorliegenden Beschreibung von einer axialen Länge gesprochen wird, so bezieht sich dies auf eine Position entlang einer schematisch eingezeichneten x-Achse, die sich in Richtung der Drehachse D erstreckt. Insbesondere sind damit die Koppelstrukturen 46a.1 und 46b.2 auf gleicher axialer Höhe angeordnet wie die Drehlagerung 38.

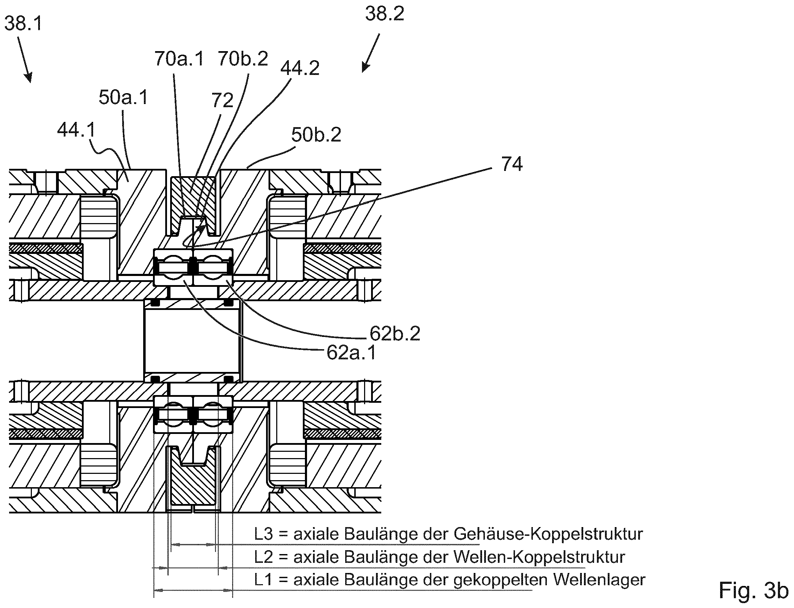

Figur 3b zeigt einen Ausschnitt aus Figur 3a. Es ist zu erkennen, dass das Modul-Gehäuse 44.1 eine erste Gehäuse-Koppelstruktur 70a.1, die einen ersten konischen Gehäusering bildet, besitzt. Das zweite Modul-Gehäuse 44.2 besitzt eine zweite Gehäuse-Koppelstruktur 70b.2, die ebenfalls einen zweiten konischen Gehäusering bildet. Die beiden Gehäuse-Koppelstrukturen 70a.1, 70b.2 sind mittels eines Verbinders in Form einer Koppel-Schelle 72 formschlüssig verbunden. Die Koppel-Schelle 72 besitzt eine konische Innenfläche 74, die mit den Gehäuse-Koppelstrukturen 70a.1, 70b.2 jeweilige Flächenberührungen hat und so einen Formschluss bewirkt.

Figur 3b zeigt zudem, dass eine axiale Baulänge L1 weniger als das Doppelte, hier weniger als das 1 ,5-fache einer axialen Baulänge L2 eines Kopplungsabschnitts beträgt. Die axiale Baulänge L2 entspricht der axialen Länge der Wellen-Koppelung. Eine axiale Baulänge L3 der Koppel-Schelle 72 ist um einen kleinen Betrag kleiner als die axiale Baulänge L2.

Die Koppel-Schelle 72 ist so gestaltet, dass sie von außen gelöst und angezogen werden kann. Es ist dadurch möglich, zwei Elektromotor-Module 38.1, 38.2 dadurch zu verbinden, dass zunächst die Rotorwellen mittels ihrer jeweiligen Wellen-Koppelstrukturen miteinander verbunden werden. Danach werden die Gehäuse mittels des Verbinders, hier also der Koppel-Schelle 72, miteinander verbunden. Zum Lösen der Verbindung zwischen den beiden Elektromotor-Modulen 38.1, 38.2 muss lediglich die Koppel-Schelle 72 entfern werden, dann können die Rotorwellen axial auseinander gezogen werden.

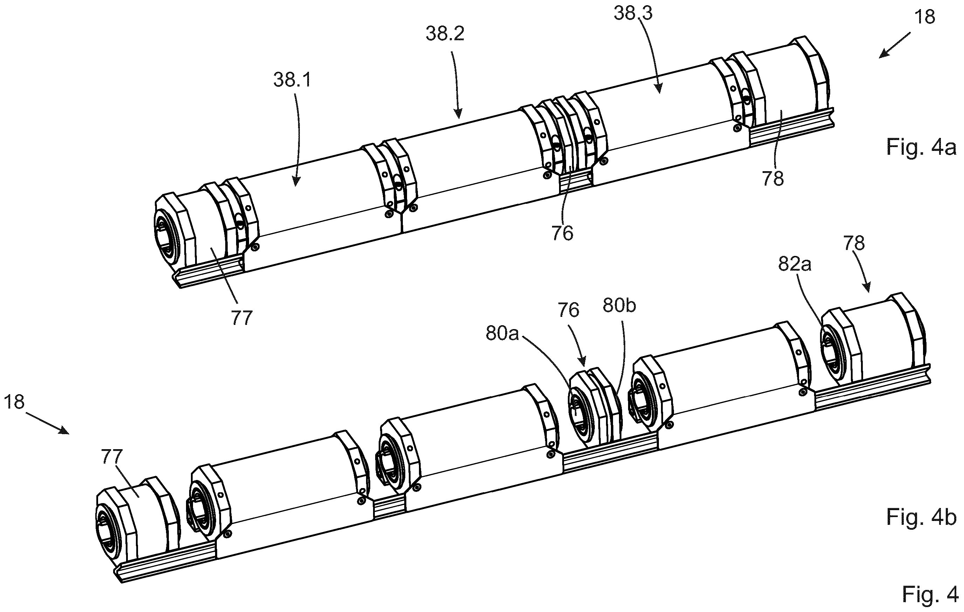

Figur 4a zeigt einen erfindungsgemäßen Elektromotor, der drei Elektromotor-Module 38.1, 38.2 und 38.3 sowie einen Drehgeber 76, eine Kupplung 77 und eine Bremse 78 umfasst. Der Drehgeber 76 und die Bremse 78 besitzen jeweils eine Welle, die koaxial zu den Rotorwellen der Elektromotor-Module 38.i verlaufen.

Figur 4b zeigt eine Teil-Explosionsansicht des Elektromotors 18 gemäß Figur 4a. Es ist zu erkennen, dass der Drehgeber 76 Drehgeber-Koppelstrukturen 80a, 80b hat, die den Koppelstrukturen 46 der Elektromotor-Module 38 entsprechen.

Die Bremse 78 besitzt zumindest eine Bremsen-Koppelstruktur 82a, die ebenfalls wie die sonstigen Koppelstrukturen aufgebaut ist, sodass die Bremse 78 so mit dem Drehgeber 76 als auch mit jedem Elektromotor-Modul 38 formschlüssig verbindbar ist. Die Kupplung 77 besitzt die gleiche Koppelstruktur wie die Bremse 78, sodass sie wie die Bremse 78 mit jedem Elektromotor-Modul gekoppelt werden kann.

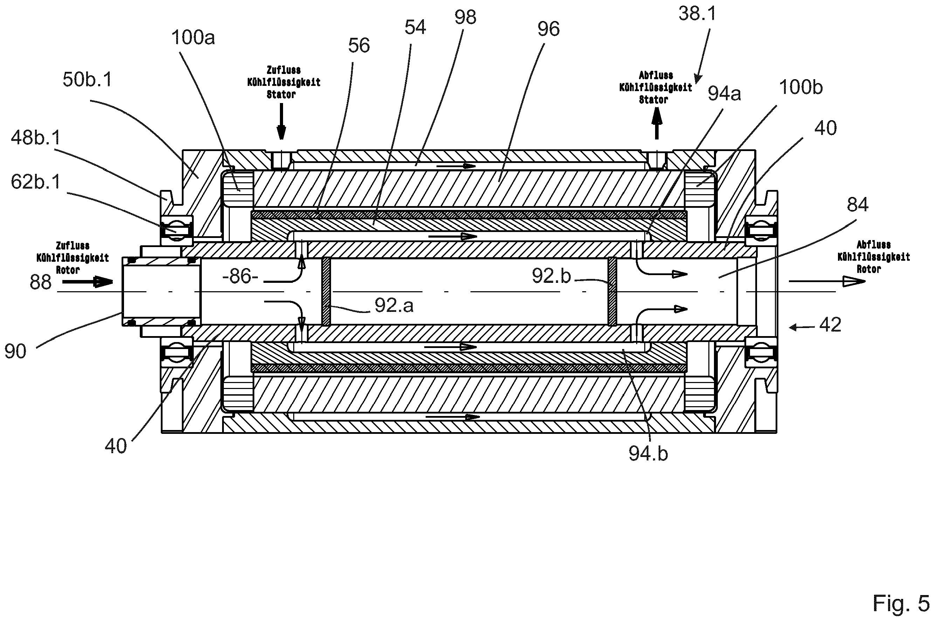

Figur 5 zeigt einen Querschnitt durch das Elektromotor-Modul 38.1, das zugleich als eigenständiger Elektromotor angesehen werden kann. Es ist zu erkennen, dass in der Rotorwelle 40 ein Kühlkanal 84 angeordnet ist. Ein Kühlfluid 86 in Form einer Kühlflüssigkeit wird in der vorliegenden Form axial durch eine Kühlfluid-Zuführung 88 zugeführt. Eine Dichtbuchse 90 rotiert mit der Rotorwelle und ist über Dichtungen mit der Rotorwelle 40 verbunden.

In der Rotorwelle 40 ist mindestens eine, bevorzugt sind zwei Trennwände 92a, 92b angeordnet, die dazu führen, dass das Kühlfluid 86 durch einen ersten Nebenkanal 94a, einen zweiten Nebenkanal 94b oder einen sonstigen, nicht eingezeichneten Nebenkanal fließt. Die Nebenkanäle 94a, 94b, ... verlaufen sowohl in axialer wie auch in radialer Richtung und damit weitgehend parallel zum Kühlkanal 84. Das Kühlfluid im Nebenkanal 94 kühlt den Magnetträger 54 und damit die Permanentmagnete 56.

Radial außerhalb der Permanentmagnete 56 ist ein Statorblechpaket 96 angeordnet. Das Statorblechpaket 96 wird mittels Kühlfluids in einem Statorkühlkanal 98 gekühlt. Es ist möglich, dass sich der Statorkühlkanal 98 nicht über die volle Breite des Statorblechpakets erstreckt, insbesondere müssen Wicklungsköpfe 100a, 100b nicht auf einer axialen Länge liegen, auf der sich auch der Statorkühlkanal 98 erstreckt.

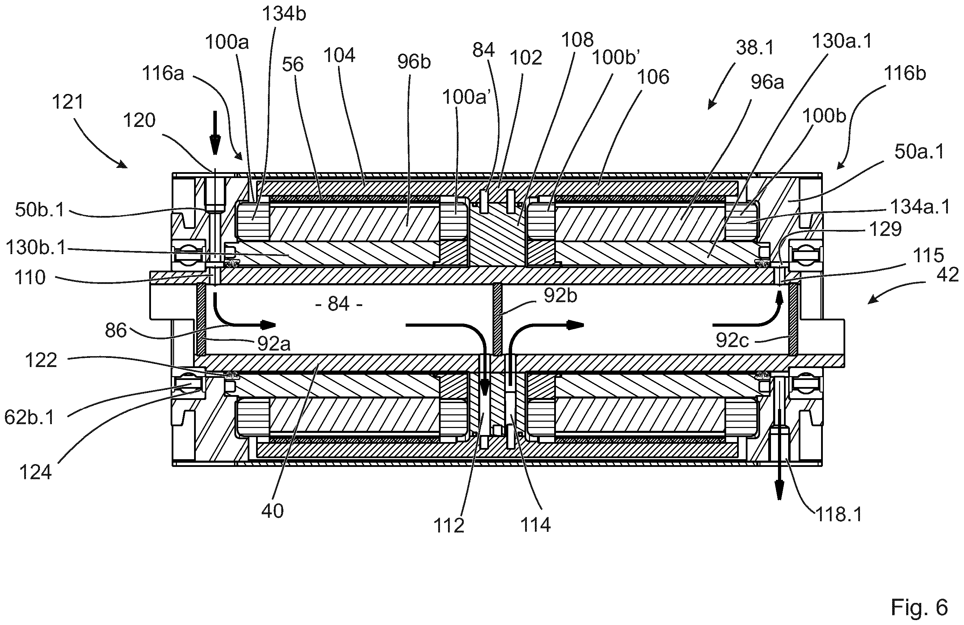

Figur 6 zeigt eine weitere Ausführungsform eines erfindungsgemäßen Elektromotor-Moduls 38, das gleichzeitig eine eigenständige Ausführungsform eines erfindungsgemäßen Elektromotors darstellt. Da es sich bei dem Elektromotor gemäß Figur 5 um einen Innenläufer handelt, handelt es sich bei dem Elektromotor 38 gemäß Figur 6 um einen Außenläufer, bei dem die Permanentmagnete 56 radial außerhalb des Statorblechpakets 96 angeordnet sind. Die Statorblechpakete 96a, 96b greifen in einen Raum zwischen der Rotorwelle 40 und einem rohrförmigen Bauteil 102, das einen ersten Hülsenabschnitt 104 und einen zweiten Hülsenabschnitt 106 aufweist. Das rohrförmige Bauteil 102 ist an einem Steg 108 befestigt, der auch als Rotornabe bezeichnet werden kann. Das rohrförmige Bauteil 102 sowie der Steg 108 bilden ein T-förmiges Rotorelement.

Die Rotorwelle 40 weist einen Zuführ-Stichkanal 110 auf, mittels dem das Kühlfluid 86 in den Kühlkanal 84 geleitet werden kann. Die Trennwände 92a, 92b, 92c führen dazu, dass das Kühlfluid aus dem Stichkanal 110 zunächst einen Teil im Kühlkanal 84 zurücklegt und dann in einen ersten Steg-Kanal 112 fließt, von wo aus es in einen nicht eingezeichneten Kanal im rohrförmigen Bauteil 102 fließen kann. Dort erwärmt sich das Kühlfluid und fließt durch einen zweiten Steg-Kanal 114 im Steg 108 zurück in den Kanal 84. Über einen Abführ-Stichkanal 115 fließt das Kühlfluid aus dem Rotor 42 in einen Wellenringkanal 129 zwischen Statorgehäuse 121 und Rotorwelle 40 und von dort in eine Kühlfluid-Abführung 118.

Das Kühlfluid 86 gelangt über eine Kühlfluid-Zuführung 120 zum Zuführ-Stichkanal 110 die Kühlfluid-Zuführung 120 ist ebenfalls in einem Statorgehäuse 121 ausgebildet, im vorliegenden Fall in der Statorkappe 50b1. Die Kühlfluid-Zuführung 120 umfasst eine erste Wellendichtung 122 und eine zweite Wellendichtung 124. In der vorliegenden Ausführungsform dient die zweite Wellendichtung 124 zudem dazu, das Drehlager 62b.1 abzudichten. Selbstverständlich ist es aber auch möglich, die zweite Wellendichtung an einer anderen Position anzuordnen.

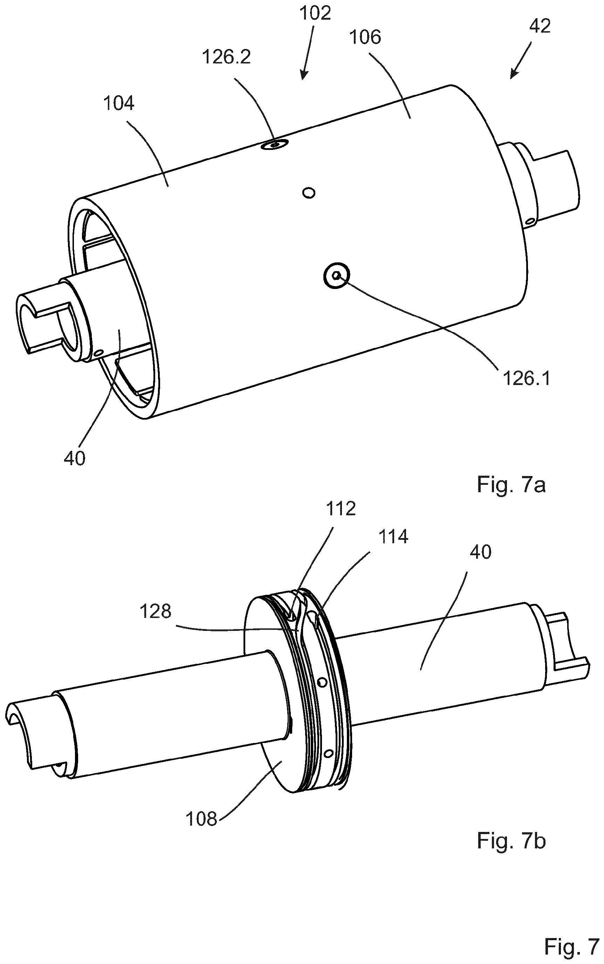

Figur 7a zeigt eine isometrische Ansicht des Rotors 42 des Moduls 38.1. Es ist zu erkennen, dass das rohrförmige Bauteil 102 mittels Schrauben 126.1, 126.2 am Steg 108 (vgl. Figur 7b) befestigt ist.

Figur 7b zeigt die Stegkanäle 112, 114, zwischen denen ein Stegringkanal 128 angeordnet ist. Kühlfluid fließt vom Stegringkanal 128 in das offene Bauteil 102 und von dort zurück, sodass es in den zweiten Steg-Kanal 114 gelangt.

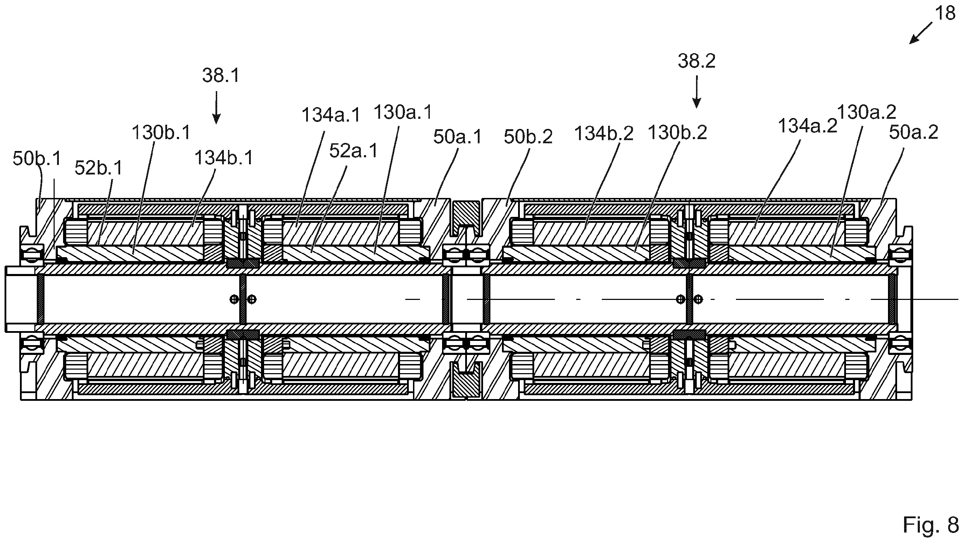

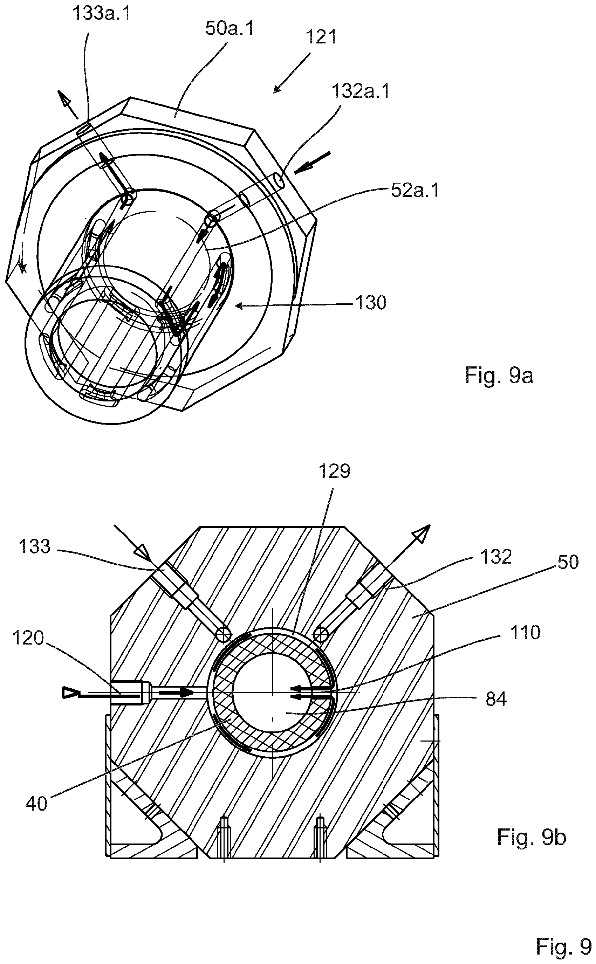

Figur 8 zeigt einen Querschnitt durch einen Elektromotor 18, der aus zwei Elektromotor-Modulen 38.1, 38.2 der Außenläufer-Version aufgebaut ist. Figur 9a zeigt einen Teil des Statorgehäuses 121, bestehend aus Statorkappe 50 und Statorträger 52, der einen Zufluss 132 für Kühlfluid und einen Abfluss 133 für Kühlfluid aufweist und einen Kühlstützen 130 besitzt.. In Figur 9 sind die Kühlstutzen des Elektromotors 18 ebenfalls eingezeichnet und hier - wie auch bei den sonstigen mehrfach vorhandenen Komponenten - sowohl mit den Zählsuffixen "a" und "b" sowie ".1" und ".2" gekennzeichnet. Diese Zählung soll dazu dienen, mehrfach vorhandene Objekte möglichst einfach als gleichartig zu benennen. Mittels Kühlstützen 130 werden Stator-Elektromagnete 134 (vgl. Figuren 7 und 9) der Elektromotoren, die Außenläufer sind, gekühlt.

Figur 9b zeigt einen Querschnitt durch die Statorkappe 50 und die Rotorwelle 40 zur Darstellung des Wellenringkanals 129.

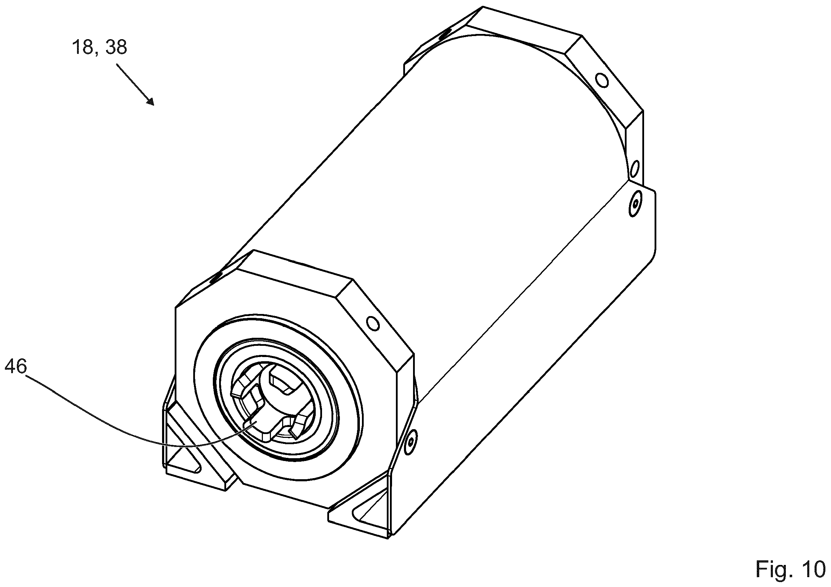

Figur 10 zeigt eine weitere Ausführungsform eines Elektromotor-Moduls 38, bei dem die Wellen-Koppelstruktur 46 mehrzähnig ausgebildet ist.

**Bezugszeichenliste**

| | | | |
|---|---|---|---|
| 10 | Elektrofahrzeug | 70 | Gehäuse-Koppelstruktur |
| 12 | erste Achse | 72 | Koppel-Schelle |
| 14 | zweite Achse | 74 | Innenfläche |
| 16 | Räder | 76 | Drehgeber |
| 18 | Elektromotor | 77 | Schaltkupplung |
| 20 | Differenzial | 78 | Bremse |
| 22 | Batterie | 79 | Koppelgetriebe |
| 24 | Batterie-Einheit | | |
| 26 | Fahrzeugboden | 80 | Drehgeber-Koppelstruktur |
| 28 | Karosserie | 81 | Kupplung-Koppelstruktur |
| | | 82 | Bremsen-Koppelstruktur |
| 30 | Fahrersitz | 84 | Kühlkanal |
| 32 | Beifahrersitz | 86 | Kühlfluid |
| 34 | Boden | 88 | Kühlfluid-Zuführung |
| 36 | Fahrgastraum | | |
| 38 | Elektromotor-Modul | 90 | Dichtbuchse |
| | | 92 | Trennwand |
| 40 | Rotorwelle | 94 | Nebenkanal |
| 42 | Rotor | 96 | Statorblechpaket |
| 44 | Modul-Gehäuse | 98 | Statorkühlkanal |
| 46 | Wellen-Koppelstruktur | | |
| 48 | Gehäusering | 100 | Wicklungskopf |
| | | 102 | rohrförmiges Bauteil |
| 50 | Statorkappe | 104 | erster Hülsenabschnitt |
| 52 | Statorträger | 106 | zweiter Hülsenabschnitt |
| 54 | Magnetträger | 108 | Steg |
| 56 | Permanentmagnet | | |
| 58 | Vorsprung | 110 | Zuführ-Stichkanal |
| | | 112 | Steg-Kanal |
| 60 | Lagersitzfläche | 114 | zweiter Steg-Kanal |
| 62 | Drehlager | 115 | Abführ-Stichkanal |
| 64 | Wälzkörper | 116 | Stator |
| 66 | Wälzkörper | 118 | Kühlfluid-Abführung |
| 68 | Drehlagerung | | |
| | | E | Winkelmessebene |
| 120 | Kühlfluid-Zuführung | i, j | Laufindices |
| 121 | Statorgehäuse (besteht aus Statorkappe 50 und Statorträger 52) | Kᵢ | Kontaktfläche |
| 122 | erste Wellendichtung | L1 | axiale Baulänge Drehlagerung |
| 124 | zweite Wellendichtung | L2 | axiale Baulänge der Wellen- |
| 126 | Schraube | | Koppelstruktur |
| 128 | Stegringkanal | L3 | axiale Baulänge der Gehäuse- |
| 129 | Wellenringkanal | | Koppelstruktur |
| 130 | Kühlstutzen | mₗ | linke Batteriemasse |
| 132 | Zufluss | mᵣ | rechte Batteriemasse |
| 133 | Abfluss | Q | zentrales Perzentil |
| 134 | Stator-Elektromagnet | Q1, Q2 | Quader |
| | | S₁₀ | Fahrzeug-Masseschwerpunkt |
| A | Achsabstand | | |
| D | Drehachse | S₁₈ | Elektromotor-Masseschwerpunkt |
| D₁₈ | Motor-Drehachse | S₂₂ | Batterie-Masseschwerpunkt |

## Patentansprüche

1. Elektrofahrzeug (10) mit einem Elektromotor (18), der
(a) ein erstes Elektromotor-Modul (38.1), das
- einen ersten Rotor (42.1), der eine erste Rotorwelle (40.1) besitzt, aufweist und
- dessen Rotorwelle (40.1) eine erste Wellen-Koppelstruktur (46a) hat, und
(b) zumindest ein zweites Elektromotor-Modul (38.2), das
- einen zweiten Rotor (42.2), der eine zweite Rotorwelle (40.2) besitzt, aufweist und
- dessen zweite Rotorwelle (40.2) eine zweite Wellen-Koppelstruktur (46b) hat, und
(c) eine Drehlagerung (68), mittels der die erste Rotorwelle (40.1) gelagert ist, umfasst,
(d) wobei die erste Rotorwelle (40.1) und die zweite Rotorwelle (40.2) mittels der Wellen-Koppelstrukturen (46) formschlüssig miteinander gekoppelt sind,
**dadurch gekennzeichnet, dass**
(e) die Wellen-Koppelstrukturen (46) zumindest teilweise von der Drehlagerung (68) umgeben sind,
(f) zumindest zwei Elektromotor-Module (38.1, 38.2) baugleich sind
(g) jeder Rotor jedes Elektromotor-Moduls mittels je zweier Drehlager gelagert ist, sodass die Elektromotor-Module unabhängig voneinander funktionstüchtig sind, und
(h) die Drehlagerung (68)
- ein erstes Drehlager (62a.1), das einen ersten Satz an Wälzkörpern (64), die ringförmig angeordnet sind, aufweist und
- ein zweites Drehlager (62b.2), das einen zweiten Satz an Wälzkörpern (66), die ringförmig und versetzt zum ersten Satz angeordnet sind, aufweist,
- wobei die Wellen-Koppelstrukturen (46) zumindest teilweise von dem ersten Drehlager (62a.1) und dem zweiten Drehlager (62b.2) radial umgeben sind.

2. Elektrofahrzeug (10) nach Anspruch 1, **dadurch gekennzeichnet, dass** zumindest zwei Elektromotor-Module (38.1, 38.2) permanenterregte Synchronmotoren sind.

3. Elektrofahrzeug (10) nach einem der vorstehenden Ansprüche, **dadurch gekennzeichnet, dass**
(a) die erste Wellen-Koppelstruktur (46a) einen sich in axialer Richtung erstreckenden Vorsprung (58) hat,
(b) die zweite Wellen-Koppelstruktur (46b) einen sich in axialer Richtung erstreckenden Rücksprung hat, sodass die erste Wellen-Koppelstruktur (46a) und die zweite Wellen-Koppelstruktur (46b) in axialer Richtung aneinander entlang einer Kontaktfläche (Kᵢ) anliegen und dass
(c) die Kontaktfläche (Kᵢ) mit einer Winkelmessebene (E), die eine Drehachse (D) des Rotors (42) enthält, einen Winkel von höchstens 5° bildet.

4. Elektrofahrzeug (10) nach einem der vorstehenden Ansprüche, **dadurch gekennzeichnet, dass**
(a) der Elektromotor (18) einen Drehgeber (76) aufweist, der eine Drehgeber-Koppelstruktur (80) mit einem sich in axialer Richtung erstreckenden Vorsprung (58) hat, und dass
(b) der Drehgeber (76) mit einer Wellen-Koppelstruktur (46) eines Elektromotor-Moduls (38) formschlüssig verbunden ist.

5. Elektrofahrzeug (10) nach einem der vorstehenden Ansprüche, **dadurch gekennzeichnet, dass**
(a) der Elektromotor (18) eine Bremse (78) aufweist, die eine Bremsen-Koppelstruktur (82) mit einem sich in axialer Richtung erstreckenden Vorsprung (58) hat, und dass
(b) die Bremse (78) mit einer Wellen-Koppelstruktur (46) eines Elektromotor-Moduls (38) oder des Drehgebers (76) formschlüssig verbunden ist.

6. Elektrofahrzeug (10) nach einem der vorstehenden Ansprüche, **dadurch gekennzeichnet, dass**
(i) die erste Rotorwelle (40.1) und die zweite Rotorwelle (40.2) einen Kühlkanal (84) haben und dass
(ii) der Elektromotor (18)
(a) aus einem ersten Elektromotor-Modul (38.1), das
- einen ersten Rotor (42.1), der eine erste Rotorwelle (40.1) besitzt, und
- eine Drehlagerung (68), mittels der die erste Rotorwelle (40.1) gelagert ist, aufweist und
- dessen Rotorwelle (40.1) eine erste Wellen-Koppelstruktur (46a) hat, und
(b) aus zumindest einem zweiten Elektromotor-Modul (38.2), das einen zweiten Rotor (42.2), der eine zweite Rotorwelle (40.2) besitzt, die eine zweite Wellen-Koppelstruktur (46b) hat,
aufgebaut ist,
(iii) wobei die erste Rotorwelle (40.1) und die zweite Rotorwelle (40.2) mittels der Wellen-Koppelstrukturen (46) formschlüssig miteinander gekoppelt sind,
(iv) wobei die Wellen-Koppelstrukturen (46) zumindest teilweise von der Drehlagerung (68) umgeben sind und
(v) der Kühlkanal durch den ersten Rotor (42.1) und den zweiten Rotor (42.2) verläuft.

7. Elektrofahrzeug (10) nach Anspruch 6, **dadurch gekennzeichnet, dass**
(a) die Rotorwelle (40)
- einen in axialer Richtung verlaufenden Zentral-Kühlkanal,
- einen Zuführ-Stichkanal (110), der radial auswärts verläuft und der mit dem Zentral-Kühlkanal verbunden ist, und
- einen Abführ-Stichkanal (115), der auswärts verläuft und der mit dem Zentral-Kühlkanal verbunden ist, aufweist,
(b) der Stator (116)
- eine Kühlfluid-Zuführung (120) zum Zuführen von Kühlfluid (86), insbesondere Kühlflüssigkeit, zum Zuführ-Stichkanal (110) und
- eine Kühlfluid-Abführung (118) zum Ableiten von Kühlfluid (86) aus dem Abführ-Stichkanal (115) aufweist.

8. Elektrofahrzeug (10) nach einem der Ansprüche 6 oder 7, **dadurch gekennzeichnet, dass** die Kühlfluid-Zuführung (88)
- eine erste Wellendichtung (122) und eine zweite Wellendichtung (124) hat, die einen Wellen-Ringkanal (129) bilden und
- eine Zuleitung hat, die ausgebildet ist zum Zuführen von Kühlfluid (86) zum Ringkanal.

9. Elektrofahrzeug (10) nach einem der Ansprüche 6 bis 8, **dadurch gekennzeichnet, dass** der erste Rotor (42.1)
(a) einen Magnetträger (54),
(b) eine Mehrzahl an Permanentmagneten (56), die am Magnetträger (54) befestigt sind, und
(c) einen Nebenkanal (94), der in axialer Richtung durch den Magnetträger (54) verläuft und mit dem Zentral-Kühlkanal verbunden ist, aufweist.

10. Elektrofahrzeug (10) nach einem der vorstehenden Ansprüche 6 bis 9, **dadurch gekennzeichnet, dass**
(a) die Permanentmagneten (56) radial außerhalb der Stator-Elektromagneten (134) angeordnet sind und dass
(b) die Rotorwelle (40)
- einen ersten Hülsenabschnitt (104) hat, der sich in eine erste axiale Richtung erstreckt und
- einen zweiten Hülsenabschnitt (106) hat, der sich in eine der ersten axialen Richtung entgegengesetzte Richtung erstreckt,
- wobei die Hülsenabschnitte (104, 106) symmetrisch zueinander sind, und dass
(c) die Hülsenabschnitte (104, 106) Kühlkanäle (84) enthalten.

11. Elektrofahrzeug (10) nach einem der vorstehenden Ansprüche 6 bis 10, **dadurch gekennzeichnet, dass**
(a) die Hülsenabschnitte (104, 106) an einem rohrförmigen Bauteil (102) ausgebildet sind,
(b) das rohrförmigen Bauteil (102) an einem Steg (108) befestigt ist,
(c) der Steg (108) zumindest einen radial auswärts verlaufenden Verbindungskanal hat, der den Zentral-Kühlkanal mit einem Außen-Kanal im rohrförmigen Bauteil verbindet.

12. Elektrofahrzeug (10) nach einem der vorstehenden Ansprüche 6 bis 11, **dadurch gekennzeichnet, dass** der Stator (116) einen Kühlstutzen (130) aufweist, der angeordnet ist zum Kühlen der Stator-Elektromagnete (134).

13. Elektrofahrzeug (10) nach einem der vorstehenden Ansprüche 6 bis 12,
**dadurch gekennzeichnet, dass**
(a) der Elektromotor (18) aus
(i) einem ersten Elektromotor-Modul (38.1), das
- einen ersten Rotor (42.1), der eine erste Rotorwelle (40.1) aufweist, die eine erste Wellen-Koppelstruktur (46a) hat, und
(ii) zumindest einem zweiten Elektromotor-Modul (38.2), das
- einen zweiten Rotor (42.2), der eine zweite Rotorwelle (40.2) aufweist, die eine zweite Wellen-Koppelstruktur (46b) und einen zweiten Kühlkanal (84.2) hat,
aufgebaut ist,
(b) der erste Rotor (42.1) und der zweite Rotor (42.2) mittels der Wellen-Koppelstrukturen (46) formschlüssig miteinander gekoppelt sind und dass
(c) die Kühlkanäle (84.1, 48.2) miteinander verbunden sind.

14. Elektrofahrzeug (10) nach Anspruch 13, **dadurch gekennzeichnet, dass**
(a) das erste Elektromotor-Modul (38.1) ein erstes Modul-Gehäuse (44.1) hat, das eine erste Gehäuse-Koppelstruktur (70a.1) aufweist,
(b) das zweite Elektromotor-Modul (38.2) ein zweites Modul-Gehäuse (44.2) hat, das eine zweite Gehäuse-Koppelstruktur (70b.2) aufweist,
(c) die Elektromotor-Module (38) mittels ihrer Gehäuse-Koppelstrukturen (44) formschlüssig miteinander verbunden sind und dass
(d) die Gehäuse-Koppelstruktur (70) das erste Drehlager (62a.1) radial umgibt.

## Claims

1. An electric vehicle (10) with an electric motor (18) that comprises
(a) a first electric motor module (38.11) that comprises
- a first rotor (42.1) with a first rotor shaft (40.1), and
- the rotor shaft (40.1) of which has a first shaft coupling structure (46a), and
(b) at least a second electric motor module (38.2) that comprises
- a second rotor (42.2) with a second rotor shaft (40.2), and
- the second rotor shaft (40.2) of which has a second shaft coupling structure (46b), and
(c) a pivot bearing (68) by means of which the first rotor shaft (40.1) is supported,
(d) the first rotor shaft (40.1) and the second rotor shaft (40.2) being positively connected to each other by means of the shaft coupling structures (46), **characterised in that**
(e) the shaft coupling structures (46) are at least partially surrounded by the pivot bearing (68),
(f) at least two electric motor modules (38.1, 38.2) are structurally identical,
(g) each rotor of each electric motor module is supported by means of two pivot bearings so that the electric motor modules are functional independently of one another, and
(h) the pivot bearing (68) comprises
- a first pivot bearing (62a.1) that comprises a first set of rolling elements (64) arranged in a ring shape, and
- a second pivot bearing (62b.2) that comprises a second set of rolling elements (66) arranged in a ring shape and at an offset to the first set,
- the shaft coupling structures (46) being at least partially radially surrounded by the first pivot bearing (62a.1) and the second pivot bearing (62b.2).

2. The electric vehicle (10) according to claim 1, **characterised in that** at least two electric motor modules (38.1, 38.2) are permanently excited synchronous motors.

3. The electric vehicle (10) according to one of the preceding claims, **characterised in that**
(a) the first shaft coupling structure (46a) has a projection (58) extending in the axial direction,
(b) the second shaft coupling structure (46b) has a recess extending in the axial direction so that the first shaft coupling structure (46a) and the second shaft coupling structure (46b) rest against each other along a contact surface (Kᵢ) and that
(c) the contact surface (Kᵢ) forms an angle of at most 5° with an angle measurement plane (E), which contains an axis of rotation (D) of the rotor (42).

4. The electric vehicle (10) according to one of the preceding claims, **characterised in that**
(a) the electric motor (18) has a rotary encoder (76) that has a rotary encoder coupling structure (80) with a projection (58) extending in the axial direction, and that
(b) the rotary encoder (76) is positively connected to a shaft coupling structure (46) of an electric motor module (38).

5. The electric vehicle (10) according to one of the preceding claims, **characterised in that**
(a) the electric motor (18) has a brake (78) that has a brake coupling structure (82) with a projection (58) extending in the axial direction, and that
(b) the brake (78) is positively connected to a shaft coupling structure (46) of an electric motor module (38) or the rotary encoder (76).

6. The electric vehicle (10) according to one of the preceding claims, **characterised in that**
(i) the first rotor shaft (40.1) and the second rotor shaft (40.2) have a cooling duct (84) and that
(ii) the electric motor (18) is composed of
(a) a first electric motor module (38.11) that comprises
- a first rotor (42.1) with a first rotor shaft (40.1), and
- a pivot bearing (68) by means of which the first rotor shaft (40.1) is supported, and
- the rotor shaft (40.1) of which has a first shaft coupling structure (46a), and
(b) at least a second electric motor module (38.2) that comprises a second rotor (42.2) with a second rotor shaft (40.2) that has a second shaft coupling structure (46b),
(iii) the first rotor shaft (40.1) and the second rotor shaft (40.2) being positively connected to each other by means of the shaft coupling structures (46),
(iv) the shaft coupling structures (46) at least partially being surrounded by the pivot bearing (68) and
(v) the cooling duct extending through the first rotor (42.1) and the second rotor (42.2).

7. The electric vehicle (10) according to claim 6, **characterised in that**
(a) the rotor shaft (40) comprises
- a central cooling duct extending in the axial direction,
- a feed puncture channel (110) that extends radially outwards and is connected to the central cooling duct, and
- a discharge puncture channel (115) that extends outwards and is connected to the central cooling duct,
(b) the stator (116) comprises
- a cooling fluid feed (120) for feeding cooling fluid (86), in particular cooling liquid, to the feed puncture channel (110) and
- a cooling fluid discharge (118) for draining cooling fluid (86), in particular cooling liquid, out of the discharge puncture channel (115).

8. An electric vehicle (10) according to one of the claims 6 or 7, **characterised in that** the cooling fluid feed (88)
- has a first shaft seal (122) and a second shaft seal (124) which form a shaft annular duct (129) and
- has a feed designed to feed cooling fluid (86) to the annular duct.

9. An electric vehicle (10) according to one of the claims 6 or 8, **characterised in that** the first rotor (42.1) comprises
(a) a magnet support (54),
(b) a plurality of permanent magnets (56) fixed to the magnet support (54) and
(c) an ancillary duct (94) that extends through the magnet support (54) in the axial direction and is connected to the central cooling duct.

10. The electric vehicle (10) according to one of the claims 6 to 9, **characterised in that**
(a) the permanent magnets (56) are arranged radially outside the stator electromagnets (134) and that
(b) the rotor shaft (40) has
- a first sleeve section (104) that extends in a first axial direction (R) and
- a second sleeve section (106) that extends in an axial direction opposite to the first axial direction,
- the sleeve sections (104, 106) being symmetrical to one another, and that
(c) the sleeve sections (104, 106) contain cooling ducts (84).

11. The electric vehicle (10) according to one of the claims 6 to 10, **characterised in that**
(a) the sleeve sections (104, 106) are configured on a tubular component (102),
(b) the tubular component (102) is fixed to a web (108),
(c) the web (108) has at least one connection channel extending radially outwards which connects the central cooling duct to an outer duct in the tubular component.

12. The electric vehicle according to one of the claims 6 to 11, **characterised in that** the stator (116) comprises a cooling nozzle (130) that is arranged to cool the stator electromagnets (134).

13. The electric vehicle (10) according to one of the claims 6 to 12, **characterised in that**
(a) the electric motor (18) is composed of
(i) a first electric motor module (38.11) that comprises
- a first rotor (42.1) with a first rotor shaft (40.1) which has a first shaft coupling structure (46a), and
(ii) at least a second electric motor module (38.2) that comprises
- a second rotor (42.2) with a second rotor shaft (40.2) which has a second shaft coupling structure (46b) and a second cooling duct (84.2),
(b) the first rotor (42.1) and the second rotor (42.2) are positively connected to each other by means of the shaft coupling structures (46) and that
(c) the cooling ducts (84.1, 48.2) are connected to each other.

14. The electric vehicle (10) according to claim 13, **characterised in that**
(a) the first electric motor module (38.1) has a first module housing (44.1) which comprises a first housing coupling structure (70a.1),
(b) the second electric motor module (38.2) has a second module housing (44.2) which comprises a second housing coupling structure (70b.2),
(c) the electric motor modules (38) are positively connected to each other by means of their housing coupling structures (44) and that
(d) the housing coupling structure (70) radially surrounds the first pivot bearing (62a.1).

## Revendications

1. Véhicule électrique (10) comprenant un moteur électrique (18) qui comprend
(i) un premier module de moteur électrique (38.1)
- comprenant un premier rotor (42.1) qui possède un premier arbre de rotor (40.1) et
- dont l'arbre de rotor (40.1) présente une première structure de couplage d'arbre (46a), et
(ii) au moins un deuxième module de moteur électrique (38.2)
- comprenant un deuxième rotor (42.2) qui possède un deuxième arbre de rotor (40.2) et
- dont le deuxième arbre de rotor (40.2) présente une deuxième structure de couplage d'arbre (46b), et
(iii) une unité de montage en rotation (68) au moyen de laquelle le premier arbre de rotor (40.1) est monté,
(iv) le premier arbre de rotor (40.1) et le deuxième arbre de rotor (40.2) étant couplés l'un à l'autre par complémentarité de forme au moyen des structures de couplage d'arbre (46),
**caractérisé en ce que**
(v) les structures de couplage d'arbre (46) sont au moins partiellement entourées par l'unité de montage en rotation (68),
(vi) au moins deux modules de moteur électrique (38.1, 38.2) sont de construction identique,
(vii) chaque rotor de chaque module de moteur électrique est monté au moyen de deux paliers rotatifs, de sorte que les modules de moteur électrique sont opérationnels indépendamment l'un de l'autre, et
(viii) l'unité de montage en rotation (68) comprend
- un premier palier rotatif (62a.1) qui comprend un premier ensemble de corps de roulement (64) disposés en forme d'anneau, et
- un deuxième palier rotatif (62b.2) qui comprend un deuxième ensemble de corps de roulement (66) disposés en forme d'anneau et décalés par rapport au premier ensemble,
- les structures de couplage d'arbre (46) étant au moins partiellement entourées radialement par le premier palier rotatif (62a.1) et par le deuxième palier rotatif (62b.2).

2. Véhicule électrique (10) selon la revendication 1, **caractérisé en ce qu'**au moins deux modules de moteur électrique (38.1, 38.2) sont des moteurs synchrones à excitation permanente.

3. Véhicule électrique (10) selon l'une des revendications précédentes, **caractérisé en ce que**
(a) la première structure de couplage d'arbre (46a) présente une saillie (58) s'étendant dans la direction axiale,
(b) la deuxième structure de couplage d'arbre (46b) présente un retrait s'étendant dans la direction axiale, de sorte que la première structure de couplage d'arbre (46a) et la deuxième structure de couplage d'arbre (46b) sont en appui l'une contre l'autre dans la direction axiale le long d'une surface de contact (Kᵢ), et **en ce que**
(c) la surface de contact (Kᵢ) forme un angle de 5° au maximum avec un plan de mesure angulaire (E) contenant un axe de rotation (D) du rotor (42).

4. Véhicule électrique (10) selon l'une des revendications précédentes, **caractérisé en ce que**
(a) le moteur électrique (18) comprend un capteur de rotation (76) qui présente une structure de couplage de capteur de rotation (80) ayant une saillie (58) s'étendant dans la direction axiale, et **en ce que**
(b) le capteur de rotation (76) est relié par complémentarité de forme à une structure de couplage d'arbre (46) d'un module de moteur électrique (38).

5. Véhicule électrique (10) selon l'une des revendications précédentes, **caractérisé en ce que**
(a) le moteur électrique (18) comprend un frein (78) qui présente une structure de couplage de frein (82) ayant une saillie (58) s'étendant dans la direction axiale, et **en ce que**
(b) le frein (78) est relié par complémentarité de forme à une structure de couplage d'arbre (46) d'un module de moteur électrique (38) ou du capteur de rotation (76).

6. Véhicule électrique (10) selon l'une des revendications précédentes, **caractérisé en ce que**
(i) le premier arbre de rotor (40.1) et le deuxième arbre de rotor (40.2) ont un canal de refroidissement (84), et **en ce que**
(ii) le moteur électrique (18) est constitué
(a) d'un premier module de moteur électrique (38.1) comprenant
- un premier rotor (42.1) qui possède un premier arbre de rotor (40.1), et
- une unité de montage de rotation (68) au moyen de laquelle le premier arbre de rotor (40.1) est monté, et
- dont l'arbre de rotor (40.1) présente une première structure de couplage d'arbre (46a), et
(b) d'au moins un deuxième module de moteur électrique (38.2) comprenant un deuxième rotor (42.2) qui possède un deuxième arbre de rotor (40.2) présentant une deuxième structure de couplage d'arbre (46b),
(iii) le premier arbre de rotor (40.1) et le deuxième arbre de rotor (40.2) étant couplés l'un à l'autre par complémentarité de forme au moyen des structures de couplage d'arbre (46),
(iv) les structures de couplage d'arbre (46) étant au moins partiellement entourées par l'unité de montage en rotation (68), et
(v) le canal de refroidissement s'étendant à travers le premier rotor (42.1) et le deuxième rotor (42.2).

7. Véhicule électrique (10) selon la revendication 6, **caractérisé en ce que**
(a) l'arbre de rotor (40) comprend
- un canal de refroidissement central s'étendant dans la direction axiale,
- un canal de dérivation d'alimentation (110) qui s'étend radialement vers l'extérieur et qui est relié au canal de refroidissement central, et
- un canal de dérivation d'évacuation (115) qui s'étend vers l'extérieur et qui est relié au canal de refroidissement central,
(b) le stator (116) comprend
- une alimentation en fluide de refroidissement (120) pour amener le fluide de refroidissement (86), en particulier un liquide de refroidissement, au canal de dérivation d'alimentation (110), et
- une évacuation de fluide de refroidissement (118) pour évacuer le fluide de refroidissement (86) hors du canal de dérivation d'évacuation (115).

8. Véhicule électrique (10) selon l'une des revendications 6 ou 7, **caractérisé en ce que** l'alimentation en fluide de refroidissement (88) comprend
- un premier joint d'étanchéité d'arbre (122) et un deuxième joint d'étanchéité d'arbre (124) qui forment un canal annulaire d'arbre (129), et
- une conduite d'alimentation conçue pour amener le fluide de refroidissement (86) au canal annulaire.

9. Véhicule électrique (10) selon l'une des revendications 6 à 8, **caractérisé en ce que** le premier rotor (42.1) comprend
(a) un support d'aimants (54),
(b) une pluralité d'aimants permanents (56) fixés au support d'aimants (54), et
(c) un canal secondaire (94) qui s'étend dans la direction axiale à travers le support d'aimants (54) et qui est relié au canal de refroidissement central.

10. Véhicule électrique (10) selon l'une des revendications précédentes 6 à 9, **caractérisé en ce que**
(a) les aimants permanents (56) sont disposés radialement à l'extérieur des électroaimants de stator (134), et **en ce que**
(b) l'arbre de rotor (40) comprend
- une première partie de manchon (104) qui s'étend dans une première direction axiale et
- une deuxième partie de manchon (106) qui s'étend dans une direction opposée à la première direction axiale,
- les parties de manchon (104, 106) étant symétriques l'une par rapport à l'autre, et **en ce que**
(c) les parties de manchon (104, 106) comprennent des canaux de refroidissement (84).

11. Véhicule électrique (10) selon l'une des revendications précédentes 6 à 10, **caractérisé en ce que**
(a) les parties de manchon (104, 106) sont réalisées sur un composant tubulaire (102),
(b) le composant tubulaire (102) est fixé à une bride (108),
(c) la bride (108) comprend au moins un canal de communication s'étendant radialement vers l'extérieur, qui relie le canal de refroidissement central à un canal extérieur dans le composant tubulaire.

12. Véhicule électrique (10) selon l'une des revendications précédentes 6 à 11, **caractérisé en ce que** le stator (116) comporte une tubulure de refroidissement (130) agencée pour refroidir les électroaimants de stator (134).

13. Véhicule électrique (10) selon l'une des revendications précédentes 6 à 12, **caractérisé en ce que**
(a) le moteur électrique (18) est constitué
(i) d'un premier module de moteur électrique (38.1) comprenant
- un premier rotor (42.1) comprenant un premier arbre de rotor (40.1) qui présente une première structure de couplage d'arbre (46a), et
(ii) d'au moins un deuxième module de moteur électrique (38.2) comprenant
- un deuxième rotor (42.2) comprenant un deuxième arbre de rotor (40.2) qui présente une deuxième structure de couplage d'arbre (46b) et un deuxième canal de refroidissement (84.2),
(b) le premier rotor (42.1) et le deuxième rotor (42.2) sont couplés l'un à l'autre par complémentarité de forme au moyen des structures de couplage d'arbre (46), et **en ce que**
(c) les canaux de refroidissement (84.1, 48.2) sont reliés entre eux.

14. Véhicule électrique (10) selon la revendication 13, **caractérisé en ce que**
(a) le premier module de moteur électrique (38.1) comprend un premier boîtier de module (44.1) qui présente une première structure de couplage de boîtier (70a.1),
(b) le deuxième module de moteur électrique (38.2) comprend un deuxième boîtier de module (44.2) qui présente une deuxième structure de couplage de boîtier (70b.2),
(c) les modules de moteur électrique (38) sont reliés entre eux par complémentarité de forme au moyen de leurs structures de couplage de boîtier (44), et **en ce que**
(d) la structure de couplage de boîtier (70) entoure radialement le premier palier rotatif (62a.1).
